# EUROPEAN PATENT SPECIFICATION

(11) **EP 3 309 693 B1**
(45) Date of publication and mention of the grant of the patent: **21.04.2021**
(21) Application number: 16806755.1
(22) Date of filing: 03.06.2016
(51) Int. Cl.: G06F 16/22, G06F 7/08

(54) **POSITION INFORMATION PROVIDING METHOD AND DEVICE**
VERFAHREN UND VORRICHTUNG ZUR BEREITSTELLUNG VON POSITIONSINFORMATIONEN
PROCÉDÉ ET DISPOSITIF DE FOURNITURE D'INFORMATIONS DE POSITION

(30) Priority: 12.06.2015 CN 201510323607
(43) Date of publication of application: 18.04.2018
(73) Proprietor: Advanced New Technologies Co., Ltd., George Town, Grand Cayman KY1-9008 (KY)
(72) Inventor: SHAO, Mingxu, Hangzhou 310099 (CN); PAN, Haoyuan, Hangzhou 310099 (CN); XU, Di, Hangzhou 310099 (CN); QIAN, Shaoli, Hangzhou 310099 (CN); ZOU, Run, Hangzhou 310099 (CN); KONG, Jian, Hangzhou 310099 (CN); WANG, Tao, Hangzhou 310099 (CN); WANG, Hui, Hangzhou 310099 (CN)
(74) Representative: Fish & Richardson P.C.
(86) International application number: PCT/CN2016/084594
(87) International publication number: WO 2016/197857

(56) References cited:
- EP-A1- 2 416 290
- CN-A- 102 737 047
- CN-A- 103 248 723
- CN-A- 104 516 915
- CN-A- 104 636 482
- CN-A- 104 636 482
- US-A1- 2012 046 017
- US-A1- 2012 063 367
- US-A1- 2014 207 795
- US-A1- 2015 074 214

## Description

The present application claims priority to Chinese Patent Application No. 201510323607.8 filed on June 12, 2015 and entitled "POSITION INFORMATION PROVIDING METHOD AND DEVICE."

### Technical field

The present application relates to positioning technologies, and in particular, to a position information providing method and device.

### Background art

Spatial position selection refers to a process of selecting a position for one or more position selection objects in a particular geographical region, such that a particular index or comprehensive index becomes optimal.

During spatial position selection in the prior art, statuses of a population in several regions are generally learned by means of a questionnaire survey, then the questionnaire survey is analyzed, and corresponding position information is provided for a user according to the analysis result, so as to help the user make a position selection decision.

Limited by the range, quantity, and honesty degree of the questionnaire survey population, the existing position information providing method is not accurate enough.

US 2012/063367 A1 a system and method for sending a message to a select subset of users in a select crowd of users. In one embodiment, a message to be delivered to a subset of users in a select crowd of users is received from a user device of a sending user. In response, one or more users in the crowd are selected as the subset of the users in the crowd to which the message is to be delivered. In one embodiment, the one or more users are selected based on a profile matching process. The message is then sent to the one or more users selected as the subset of the users in the crowd to which the message is to be delivered.

US 2012/046017 A1 discloses systems and methods for preventing indirect user tracking in a mobile aggregate profiling system. Access to aggregate profile data for groups of users is controlled in a mobile aggregate profiling system based on rate of change values for one or more characteristics, such as population, of the groups of users.

### Summary of the Invention

Embodiments of the present application provide a position information providing method and device, so as to solve the problem in the prior art that position information provided for a user is not accurate enough. The present invention is defined by the claims.

The position information providing method and device in the embodiments of the present application determine the quantities of users having a target user characteristic in respective second regions according to a position of a user in a target region, further determine candidate regions from the second regions according to the quantities of users having the target user characteristic, and finally provide the candidate regions for the user. In this way, a user can intuitively know the distribution of target users in respective second regions, avoiding the problem of low accuracy in the prior art caused by dependency on the range, quantity, and honesty degree of a questionnaire survey population, and improving the accuracy of position information provided for the user.

### Brief Description of the Drawings

The accompanying drawings described herein are used to provide further comprehension of the present application, and constitute a part of the present application. Schematic embodiments of the present application and the description thereof are used for illustrating the present application, and do not constitute any improper limitation on the present application. In the
FIG. 1 is a flowchart of a position information providing method according to Embodiment 1 of the present application;
FIG. 2 is a schematic structural diagram of a position information providing device according to Embodiment 2 of the present application; and
FIG. 3 is a flowchart of a position information providing method according to Embodiment 3 of the present application.

### Detailed Description

To make the technical solutions and advantages of the embodiments of the present application clearer and easier to understand, exemplary embodiments of the present application are described in further detail below with reference to the accompanying drawings. Apparently, the described embodiments are merely some embodiments of the present application rather than exhaustion of all the embodiments. It should be noted that the embodiments in the present application and features in the embodiments may be combined with each other provided that they do not conflict with each other.

During the invention process, the inventor finds that not only factors such as geographical position, traffic, environment, etc. but also human factors need to be considered in position selection.

Due to a data acquisition bottleneck, conventional enterprise position selection has the following disadvantages:
1. The data acquisition cost is relatively high: the offline questionnaire survey consumes a lot of manpower and material resources.
2. Data timeliness is unsatisfactory and samples may be biased: it takes a relatively long time to obtain the survey result and finally select the position, and survey samples may also be biased due to human factors.
3. Online user behaviors are not considered in the conventional solution: people considered in the conventional spatial position selection are generally static people, while people in real world are usually dynamic. The life circle of people changes with time in 24 hours. As the Internet continuously affects people's life, online behavior data will also affect people's offline behaviors. However, users' online behaviors over the Internet cannot be considered in the conventional spatial position selection.

Due to the foregoing disadvantages, the final position selection result is in lack of timeliness and is one-sided. To solve the above disadvantages, the present application employs the big data technology to reduce the data acquisition cost, enhance the data timeliness, and integrate users' online and offline behaviors, thus providing a new idea and solution for position selection of a merchant, which may supplement the conventional position selection manner. The present application employs big data according to a common offline position of a mobile Internet user in combination with an online behavior characteristic of the user, to help an enterprise user solve the position selection problem.

The present application provides a solution of providing position information for a user according to positions and user characteristics of users in a target region, which can avoid the problem of low accuracy of a position information providing solution in the prior art, and improve the accuracy of position information provided for a user.

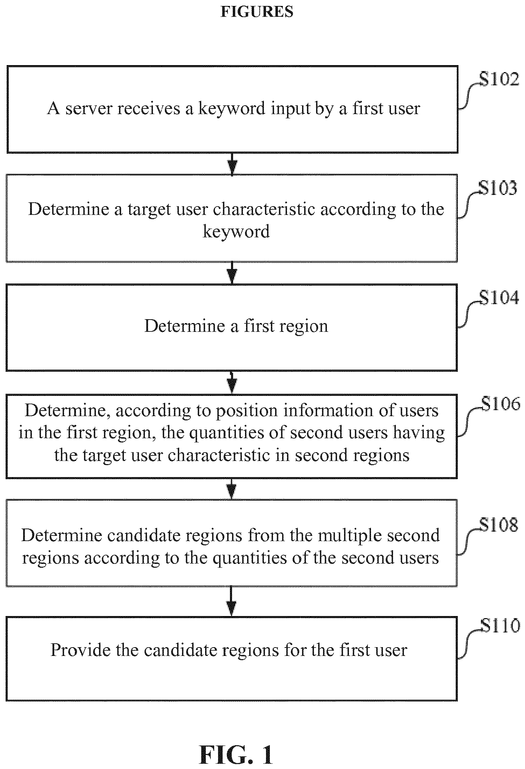

FIG. 1 is a flowchart of a position information providing method according to Embodiment 1 of the present application.

As shown in FIG. 1, the position information providing method according to Embodiment 1 of the present application includes the following steps:
S102: A server receives a keyword input by a first user.
S103: A target user characteristic is determined according to the keyword.
S104: A first region is determined, the first region including multiple second regions.
S106: The quantities of second users having the target user characteristic in respective second regions are determined according to position information of users in the first region.
S108: Candidate regions are determined from the multiple second regions according to the quantities of the second users.
S110: The candidate regions are provided for the first user.

In the embodiment of the present application, the first user may be a user having a spatial position selection requirement, and the second users may be users having the target user characteristic in the second regions.

During specific implementation, the server may receive, in multiple manners, the keyword input by the first user. For example, the server receives a position information request message from a client terminal, the request message carrying a keyword input by the first user on the client terminal; or the server directly receives a keyword input by the first user through an input/output device of the server, which is not limited in the present application.

During specific implementation, multiple common technical means in the art may be employed to receive the keyword input by the user. For example, the first user may directly input the keyword in an input field, or may select from options provided on a page for the user. Those skilled in the art should understand that the foregoing manners of receiving the keyword input by the user are merely illustrative, but are not intended to limit the present application.

During specific implementation, the target user characteristic may be determined according to the keyword in multiple manners. For example, if the keyword input by the user is consistent with a target user characteristic pre-stored in the server, the target user characteristic may be determined directly. If the keyword input by the user is inconsistent with the target user characteristic pre-stored in the server, a corresponding target user characteristic may be determined according to a corresponding relationship between keywords and target user characteristics. The corresponding relationship may be pre-stored, or may be learned by the server from a network, which is not limited in the present application.

In the embodiment of the present application, the target user characteristic includes character keywords of target users of the first user, such as a user's profession, age, consumption level, and consumption time period. Those skilled in the art should understand that all human-related characteristics are in the protection scope of the present application.

During specific implementation, the first region may be determined according to current position information of the first user, or determined according to a target region input by the first user; or target region options may be provided for the user, and the first region may be determined according to the selection of the user. For example, it may be determined, according to an IP address using which the first user surfs the Internet, that the first user is in Beijing, and then it is determined that the first region is Beijing. Alternatively, a mobile phone number of the first user may be determined according to a login account of the first user, and then it may be determined, according to a position where the number accesses a mobile network, that the first user is currently located in Hangzhou, and then it is determined that the first region is Hangzhou. Alternatively, the user inputs "Chengdu", and then it is determined that the first region is Chengdu. Those skilled in the art should understand that the foregoing first region determining manners are all merely illustrative, but are not intended to limit the present application.

To make the data for analysis more accurate, usually data in a latest period of time is selected as an analysis basis. Therefore, during specific implementation, positions of users in the first region in a predetermined period of time are usually selected to determine the quantity of second users. The predetermined period of time may be, for example, latest one month, latest two months, latest three months, or the like, which may be set according to a specific requirement or a specific data acquisition situation.

During specific implementation, the positions of the users in the first region may be acquired according to networks accessed by the users in the first region, or may be acquired according to an application that the users log onto, for example, Alipay™ that the users log onto.

During specific implementation, the step of determining second regions may be carried out before the keyword input by the first user is received, or after the first region is determined and before the quantities of second users having the target user characteristic in respective second regions in the first region are determined, which is not limited in the present application.

During specific implementation, the candidate regions may be determined from the multiple second regions according to the quantities of the second users in multiple manners. For example, the second regions are sorted according to the quantities of the second users, and regions ranking at the top places are used as the candidate regions. Alternatively, second regions in which the quantities of the second users are greater than a predetermined numerical value are used as the candidate regions, and so on, which is not limited in the present application.

During specific implementation, the candidate regions may be provided for the first user in multiple manners. For example, the candidate regions may be provided in a text form for the user, for example: first recommended region: region A; second recommended region: region B.... The candidate regions may also be provided for the user more intuitively, for example, highlighted on a map. For example, a region with a larger number of second users has a darker color and lower transparency, and a region with a smaller number of second users has a lighter color and higher transparency. Those skilled in the art should understand that all manners that can provide the candidate regions for the user are in the protection scope of the present application.

During specific implementation, pre-excluded positions input by the user may further be removed before the candidate regions are provided for the first user. For example, the user inputs multiple second regions to which no attention needs to be paid, and in this case, before the candidate regions are provided for the first user, the second regions to which the user does not need to pay attention are excluded from the candidate regions, so that the position information provided for the user better meets the user requirement.

For example, a user already owns a fancy cafe at position A of Beijing currently and still wants to open a chain store. At this time, the user is in Hangzhou. After using the position information providing method provided in this embodiment of the present application, the user selects "Beijing" as the first region. After inputting target user characteristics "white collar" and "high-frequency mid-amount", the user inputs the pre-excluded position A, and selects an area having a 2-kilometer radius around A as a coverage of A. After data processing and sorting, four second regions B, C, D, E except A are determined as the candidate regions, highlighted on the map of Beijing, and returned to the user as a reference for position selection.

In the position information providing method in this embodiment of the present application, the quantities of users having a target user characteristic in second regions are determined according to a position of a user in a target region; candidate regions are determined according to the quantities of users having the target user characteristic, and finally the candidate regions are provided for the user. In this way, a user can intuitively know the distribution of target users in the second regions, avoiding the problem of low accuracy in the prior art caused by dependency on the range, quantity, and honesty degree of a questionnaire survey population, and improving the accuracy of position information provided for the user.

Before the step of determining, according to position information of users in the first region, the quantities of second users having the target user characteristic in respective second regions, the method further includes: dividing the first region into multiple second regions according to a predetermined rule; acquiring positions of all third users in the first region within a predetermined period of time; and acquiring user characteristics of all the third users in the first region within the predetermined period of time.

During specific implementation, the division of the first region into multiple second regions according to the predetermined rule may be dividing the first region according to a predetermined region size, for example 20m^{∗}20m, or may be first converting the collected user position into a longitude and latitude, and then converting the longitude and latitude into a corresponding second region according to an application of a geographical position service provider, such as an interface provided by Amap. Further, division may also be carried out by using a population density. For example, a region with a relatively high population density (such as downtown) may be divided by using a relatively small region size; an area with a relatively low population density (such as a suburb) may be divided by using a relatively small region size. Those skilled in the art should understand that the foregoing manners are merely shown for the illustrative purpose, but are not intended to limit the present application.

During specific implementation, the position of the user may be acquired according to a network that the user accesses, or the position of the user may be acquired according to an application that the user logs onto.

During specific implementation, in this embodiment of the present application, there is no fixed step sequence among the three steps of dividing the first region into multiple second regions according to a predetermined rule, acquiring positions of all third users in the first region within a predetermined period of time, and acquiring user characteristics of all the third users in the first region within the predetermined period of time, provided that they are performed before the step of determining the quantities of second users having the target user characteristic in respective second regions in the first region.

In order to improve a response speed of providing position information for the user, before the keyword input by the user is received, the first region is divided into multiple second regions in advance according to the predetermined rule; the positions of all the third users in the first region within the predetermined period of time are acquired; and the user characteristics of all the third users in the first region within the predetermined period of time are acquired. In this way, after the keyword that is input by the user and includes the first region and the target user characteristic is received, the quantities of users having the target user characteristic in the second regions can be acquired quickly. In addition, the second regions are sorted according to the quantities, and the position information is finally fed back to the user rapidly, thus improving user experience.

Preferably, the step of acquiring positions of third users in the first region within a predetermined period of time specifically includes: acquiring multiple second regions where the third users in the first region are located when logging onto a predetermined application within the predetermined period of time, and the numbers of times each of the third users logs onto the application in respective second regions; and using a second region in which one third user logs onto the application for the largest number of times as the position of the third user.

A region in which each user logs onto the predetermined application for the largest number of times is a life circle of the user in a recent period of time. During specific implementation, if the target user characteristic input by the first user further includes a time-period characteristic of the user in daytime or at night, when the number of times the user logs onto the predetermined application in each region is acquired, a specific time period in which the user logs onto the predetermined application in each region is further determined, so as to subsequently determine the number of times the user logs onto the application in daytime in each region, the number of times the user logs onto the application at night in each region, and the number of times the user logs onto the application in each region. Finally, a second region in which each user logs onto the application for the largest number of times is used as the position of the user. Alternatively, a second region in which each user logs onto the application for the largest number of times in the daytime is used as the daytime position of the user, and a second region in which each user logs onto the application for the largest number of times at night is used as the night position of the user.

During specific implementation, the predetermined application may be any application having a position acquisition service function, for example, Alipay™, QQ, Weibo, Wechat, and so on. Those skilled in the art should understand that the foregoing description is merely for the illustrative purpose, but is not intended to limit the present application.

During specific implementation, in order to determine the number of times the third user logs onto the predetermined application in the predetermined period of time, it is necessary to determine a corresponding relationship between the third user and the predetermined application. This corresponding relationship may be determined by various common means of those skilled in the art, for example, a corresponding relationship between an ID for logging onto the application and a mobile phone number of the user, a corresponding relationship between an IP address using which the user logs onto the application and an IP address of a user equipment, and so on. Those skilled in the art should understand that the foregoing description is merely for the illustrative purpose, but is not intended to limit the present application.

Preferably, the step of acquiring user characteristics of all the third users in the first region within the predetermined period of time specifically includes: acquiring network information of the third users in the first region; and determining the user characteristics of the third users according to the network information.

During specific implementation, the user characteristic of the third user may be determined in the following multiple manners. For example, the user characteristic of the third user is determined according to user information of the predetermined application that the user logs onto, for example, determining age, gender, birthday and so on of the user according to user information in an instant messaging tool (such as QQ). It is judged that the identity of the user is a college student/white-collar worker according to that a common logistic address of the user is a college/office building. It is judged that a consumption characteristic of the user is high-frequency high-amount according to the shopping frequency and amount of the user. Those skilled in the art should understand that the foregoing description is merely for the illustrative purpose, but is not intended to limit the present application.

Preferably, the step of determining the quantities of second users having the target user characteristic in respective second regions specifically includes: determining the third users whose positions are in respective second regions; and screening out second users having the target user characteristic from the third users, and counting the quantities of the second users.

The step of determining candidate regions from the multiple second regions according to the quantities of the second users specifically includes: determining index values of the target user characteristic in respective second regions according to the quantities of the second users; sorting the multiple second regions according to the index values; and using the top M second regions as the candidate regions, M being a predetermined numerical value.

The step of determining index values of the target user characteristic in respective second regions according to the quantities of the second users specifically includes: sorting the second regions according to an ascending order of the quantities of the second users, and sequentially assigning sequence numbers from 1 to N, wherein N is a positive integer greater than 1; determining sequence number values corresponding to respective second regions according to the following formula: the sequence number value=(the sequence number of each second region/the total number of second regions-0.5)^{∗}2; and determining index values corresponding to respective second regions according to the following formula: the index value=round((ASIN(sequence number value)/π+0.5)^{∗}1000).

To avoid statistical distortion, before the second regions are sorted according to an ascending order of the quantities of the second users, second regions in which the user quantities are less than a predetermined numerical value, such as 100, may be further eliminated.

Through the foregoing algorithm, the quantities of users having the specified user characteristic are converted into indexes in the range of [0-100], and the occurrences of the indexes approximately meet a normal distribution.

During specific implementation, other common methods of those skilled in the art may also be used to convert the user quantities into indexes, which is not limited in the present application.

The position information providing method in the embodiment of the present application converts the quantity of users meeting a tag condition in a region into an index ranging from 0 to 100, so that sensitive user quantity data can be avoided without affecting the sequence of the quantities of second users in the regions. Meanwhile, all the quantities of users having the specified user characteristic are converted into regional indexes, so that the calculation amount can be reduced and calculations on user-level data are avoided, thus increasing the response speed of providing position information for the user, and improving user experience.

Preferably, the first user inputs multiple target user characteristics. The step of determining the quantities of second users having the target user characteristic in respective second regions specifically includes: determining the quantities of multiple second users having the target user characteristics in respective second regions. The step of sorting the multiple second regions according to the quantities of the second users specifically includes: separately determining an index value of each target user characteristic in respective second regions according to the quantities of the multiple second users; determining comprehensive index values of respective second regions according to the index values of the target user characteristics and weights preset for the respective target user characteristics: the comprehensive index value=a^{∗}X1+b^{∗}X2+c^{∗}X3..., wherein X1, X2, X3... are index values of respective target user characteristics; and a, b, c... are weights of respective target user characteristics; and sorting the multiple second regions according to the comprehensive index values.

In practical position selection, various aspects need to be considered comprehensively, including regional population density, regional age, regional gender, regional product penetration, and so on.

During specific implementation, the preset weight may be set by the first user, or may be a default weight. For example, a mean weight is used for the user characteristics, or an empirical weight is used for the user characteristics. All the foregoing implementations are included in the protection scope of the present application, which are not limited in the present application.

In the position information providing method in this embodiment of the present application, the quantities of users having a target user characteristic in second regions can be determined according to a position of a user in a target region after a keyword that is input by the user and includes the target user characteristic is received; candidate regions are determined according to the quantities of users having the target user characteristic, and finally the candidate regions are provided for the user. In this way, a user can intuitively know the distribution of target users in the second regions, avoiding the problem of low accuracy in the prior art caused by dependency on the range, quantity, and honesty degree of a questionnaire survey population, and improving the accuracy of position information provided for the user.

Based on a same invention concept, the embodiments of the present application further provide a position information providing device. As the problem-solving principle of the device is similar to that of the position information providing method, for implementation of the device, reference may be made to the implementation of the method, and repeated parts are not described herein again.

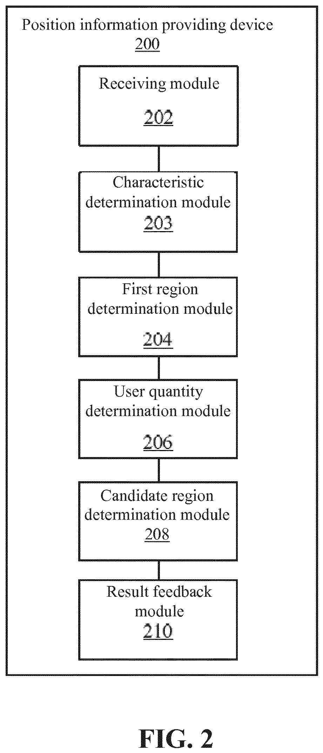

FIG. 2 is a schematic structural diagram of a position information providing device according to Embodiment 2 of the present application.

As shown in FIG. 2, the position information providing device 200 which is applied to a server and shown in Embodiment 2 of the present application includes the following modules: a receiving module 202 configured to receive a keyword input by a first user; a characteristic determination module 203 configured to determine a target user characteristic according to the keyword; a first region determination module 204 configured to determine a first region, the first region including multiple second regions; a user quantity determination module 206 configured to determine, according to position information of users in the first region, the quantities of second users having the target user characteristic in respective second regions; a candidate region determination module 208 configured to determine candidate regions from the multiple second regions according to the quantities of the second users; and a result feedback module 210 configured to provide the candidate regions for the first user.

During specific implementation, the receiving module 202 and the result feedback module 210 are generally located on a client terminal. The first region determination module 204 may be located on the client terminal or a server terminal. The user quantity determination module 206 and the candidate region determination module 208 are generally located on the server terminal. However, it should be understood that the foregoing implementations are merely shown to help those skilled in the prior art implement the present application, but are not intended to limit the present application.

Preferably, the position information providing device 200 further includes: a region division module configured to divide the first region into multiple second regions according to a predetermined rule; a position acquisition module configured to acquire positions of all third users in the first region within a predetermined period of time; and a user characteristic acquisition module configured to acquire user characteristics of all the third users in the first region within the predetermined period of time.

Preferably, the position acquisition module specifically includes: a number-of-times acquisition sub-module configured to acquire multiple second regions where the third users in the first region are located when logging onto a predetermined application within the predetermined period of time, and the numbers of times each of the third users logs onto the application in respective second regions; and a position acquisition sub-module configured to use a second region in which one third user logs onto the application for the largest number of times as the position of the third user.

Preferably, the user characteristic acquisition module specifically includes: a network information acquisition sub-module configured to acquire network information of the third users in the first region; and a user characteristic determination sub-module configured to determine the user characteristics of the third users according to the network information.

Preferably, the user quantity determination module specifically includes: a user determination sub-module configured to determine the third users whose positions are in respective second regions; and a user quantity determination sub-module configured to screen out second users having the target user characteristic from the third users, and count the quantities of the second users.

The candidate region determination module specifically includes: a first index value determination sub-module configured to determine index values of the target user characteristic in respective second regions according to the quantities of the second users; an index value sorting sub-module configured to sort the multiple second regions according to the index values; and a candidate region determination sub-module configured to use the top M second regions as the candidate regions, M being a predetermined numerical value.

The first index value determination sub-module specifically includes: a sorting unit configured to sort the second regions according to an ascending order of the quantities of the second users, and sequentially assign sequence numbers from 1 to N, wherein N is a positive integer greater than 1; a sequence number value determination unit configured to determine sequence number values corresponding to respective second regions according to the following formula: the sequence number value=(the sequence number of each second region/the total number of second regions-0.5)^{∗}2; and an index value determination unit configured to determine index values corresponding to respective second regions according to the following formula: the index value=round((ASIN(sequence number value)/π+0.5)^{∗}1000).

Preferably, there are multiple target user characteristics; the user quantity determination module is configured to determine the quantities of multiple second users having the target user characteristics in respective second regions. The sorting module specifically includes: a second index determination sub-module configured to separately determine an index value of each target user characteristic in respective second regions according to the quantities of the multiple second users; a comprehensive index value determination sub-module configured to determine comprehensive index values of respective second regions according to the index values of the target user characteristics and weights preset for the respective target user characteristics: the comprehensive index value=a^{∗}X1+b^{∗}X2+c^{∗}X3..., wherein X1, X2, X3... are index values of respective target user characteristics; and a, b, c... are weights of respective target user characteristics; and a comprehensive index value sorting sub-module configured to sort the multiple second regions according to the comprehensive index values.

For ease of description, the parts of the device are separately described as various components or units based on functions. Definitely, during implementation of the present application, the functions of the components or units may be implemented in same or multiple pieces of software or hardware.

After receiving a keyword that is input by a user and includes a target user characteristic, the position information providing device in this embodiment of the present application can determine the quantities of users having the target user characteristic in second regions according to a position of the user in a target region. The device further determines candidate regions according to the quantities of users having the target user characteristic, and finally provides the candidate regions for the user. In this way, a user can intuitively know the distribution of target users in the second regions, avoiding the problem of low accuracy in the prior art caused by dependency on the range, quantity, and honesty degree of a questionnaire survey population, and improving the accuracy of position information provided for the user.

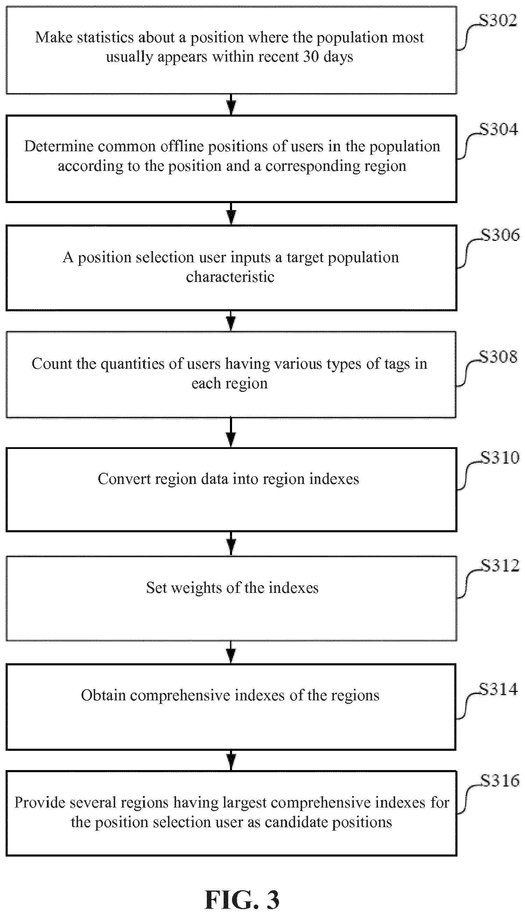

FIG. 3 is a flowchart of a position information providing method according to Embodiment 3 of the present application.

As shown in FIG. 3, the position information providing method according to Embodiment 3 of the present application includes the following steps:
S302: Statistics about a position where the population most usually appears within recent 30 days are made.
S304: Common offline positions of users in the population are determined according to the position and a corresponding region.
S306: A position selection user inputs a target population characteristic, i.e., a user tag, where the user tag may include a daytime tag or a night tag according to a user requirement, or may not include daytime and night tags.
S308: The quantities of users having various types of tags are counted in each region.
S310: Region data is converted into region indexes.
S312: Weights of the indexes are set.
S314: Comprehensive indexes of the regions are obtained.
S316: Several regions having largest comprehensive indexes are provided for the position selection user as candidate positions.

In the position information providing method in this embodiment of the present application, the quantities of users having a target user characteristic in second regions can be determined according to a position of a user in a target region after a keyword that is input by the user and includes the target user characteristic is received; the second regions are further sorted according to the quantities of users having the target user characteristic; and finally the sorting result of the multiple second regions is provided for the user. In this way, a user can intuitively know the distribution of target users in the second regions, avoiding the problem of low accuracy in the prior art caused by dependency on the range, quantity, and honesty degree of a questionnaire survey population, and improving the accuracy of position information provided for the user.

A specific implementation process of the position information providing method in the embodiment of the present application is described by using an example in which Alipay™ is used as the predetermined application. A position information providing method according to Embodiment 4 of the present application includes the following steps:
S402: The longitude and latitude of a user are collected by using a mobile device of the user.
S404: A corresponding relationship between the mobile device of the user and an Alipay™ user ID is acquired.
S406: Longitude and latitude data is converted into a region ID according to an interface provided by Amap, and a corresponding relationship between the Alipay™ user ID and the region ID is acquired.
S408: The number of times each Alipay™ user appears on each region ID in each time period within recent 30 days is counted.
S410: The number of times each Alipay™ user appears on each region ID in the day time, the number of times each Alipay™ user appears on each region ID at night, and the total number of times each Alipay™ user appears on each region ID are counted.
S412: Regions in which each Alipay™ user appears for the largest numbers of times are separately taken as a daytime region ID, a night region ID, and a common region ID of the Alipay™ user.
S414: A position selection user inputs a target population characteristic, i.e., a user tag.
S416: The quantity of users (cnt) meeting the user tag is counted in each region.
S418: It is judged whether the quantity of users meeting the user tag in each region is greater than 100; if no, the region in which the quantity of users is less than 100 is eliminated; if yes, S420 is performed.
S420: The regions are sorted according to an ascending order of cnt, and sequence numbers from 1 to N are assigned; for example, if there are 50 regions in which the quantity of users is greater than 100, sequence numbers from 1 to 50 are assigned.
S422: Sequence number values of the regions are calculated: the sequence number value=(the sequence number of each second region/the total number of second regions-0.5)^{∗}2.
S424: Index values of the regions are calculated: the index value=round((ASIN(sequence number value)/π+0.5)^{∗}1000).
S426: An index region render graph is displayed on the map according to the index values.

In the position information providing method in this embodiment of the present application, the quantities of users having a target user characteristic in second regions can be determined according to a position of a user in a target region after a keyword that is input by the user and includes the target user characteristic is received; the second regions are further sorted according to the quantities of users having the target user characteristic; and finally the sorting result of the multiple second regions is provided for the user. In this way, a user can intuitively know the distribution of target users in the second regions, avoiding the problem of low accuracy in the prior art caused by dependency on the range, quantity, and honesty degree of a questionnaire survey population, and improving the accuracy of position information provided for the user.

Those skilled in the art should understand that the embodiments of the present invention may be provided as a method, a system, or a computer program product. Therefore, the embodiments of the present application may be implemented as a complete hardware embodiment, a complete software embodiment, or an embodiment combining software and hardware. Moreover, the present invention may be a computer program product implemented on one or more computer usable storage media (including, but not limited to, a magnetic disk memory, a CD-ROM, an optical memory, and the like) including computer usable program code.

The present application is described with reference to flowcharts and/or block diagrams according to the method, device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may also be stored in a computer readable memory that can instruct the computer or any other programmable data processing device to work in a particular manner, such that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, such that a series of operation steps are performed on the particular manner, such that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, such that a series of operation steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

Although preferred embodiments of the present application have been described, once knowing the basic inventive concept, those skilled in the art can make other changes and modifications on these embodiments. Therefore, the appended claims are intended to include the preferred embodiments and all changes and modifications falling in the scope of the embodiments of the present application

Apparently, those skilled in the art can make various modifications and variations on the present application without departing from the scope of the present application. In this way, if these modifications and variations of the present application fall within the scope of claims of the present application and equivalent techniques thereof, the present application is also intended to include these modifications and variations.

## Claims

1. A method for providing position information to a user, the method comprising:
receiving (102), by a server and from a user device, keywords input by a first user;
determining (103), by the server, multiple target user characteristics according to the keywords, wherein the multiple target user characteristic comprise human-related characteristics that optionally include a user profession, age, consumption level, or consumption frequency, and wherein determining the multiple target user characteristics according to the keywords comprises:
determining, by the server, whether the keywords input by the first user comprise multiple target user characteristics stored at the server,
in response to determining that the keywords input by the first user comprise multiple target user characteristics stored at the server, setting the keywords as the multiple target user characteristics, or
in response to determining that the keywords input by the first user do not comprise a target user characteristic stored at the server, determining the multiple target user characteristics using a learned relationship between keywords and target user characteristics stored at or learned by the server;
determining (104), by the server and based on i) current position information of the first user, or ii) a target region input or selected by the first user, a first region;
dividing, by the server, the first region into multiple second regions according to a predetermined rule, wherein the dividing comprises i) dividing the first region into multiple second regions according to a predetermined region size, ii) converting the current position information of the first user into longitude and latitude coordinates and converting the longitude and latitude coordinates into a corresponding second region according to an application of a geographical position service provider, or iii) dividing the first region based on population density;
identifying, by the server, positions of all third users in the first region within a predetermined period of time;
identifying, by the server, user characteristics of all the third users in the first region within the predetermined period of time;
determining (106), by the server and according to the identified positions of all the third users in the first region, quantities of users having the multiple target user characteristics in respective second regions;
determining (108), by the server and according to the determined quantities of the users, one or more candidate regions from the multiple second regions, the determining comprising:
i) separately determining, for each of the multiple target user characteristics, index values of the target user characteristic in respective second regions according to the quantities of the users, comprising
a) sorting the second regions according to an ascending order of the quantities of the users, and sequentially assigning sequence numbers from 1 to N, wherein N is a positive integer greater than 1,
b) determining sequence number values corresponding to respective second regions according to a first formula given by: sequence number value = ((sequence number of each second region / the total number of second regions) - 0.5)^{∗}2, and
c) determining index values corresponding to respective second regions according to a second formula given by: index value = round((ASIN(sequence number value)*π*+0.5)^{∗}1000),
ii) determining comprehensive index values of respective second regions according to the index values of the multiple target user characteristics, wherein each comprehensive index value comprises a sum of index values of respective target user characteristics, the sum weighted according to preset weights,
iii) sorting the multiple second regions according to the comprehensive index values, and
iv) designating the top M second regions as the candidate regions, wherein M represents a predetermined numerical value; and
providing, by the server, the candidate regions for the first user (110).

2. The method of claim 1, wherein identifying position information for all third users in the first region within a predetermined period of time comprises:
identifying multiple second regions where the users in the first region are located when logging onto a predetermined application within the predetermined period of time, and the numbers of times each of the users log onto the application in respective second regions; and
using a second region in which one user of the users in the first region logs onto the application for the largest number of times as the position of the user.

3. The method of claim 1, wherein identifying user characteristics of all the third users in the first region within the predetermined period of time comprises:
identifying network information of the users in the first region; and
determining the user characteristics of the users in the first region according to the network information.

4. The method of claim 3, wherein determining the quantities of users having the target user characteristic in respective second regions comprises:
identifying users in the first region whose positions are in respective second regions; and
screening out users having the target user characteristic from the users in the first region, and counting the quantities of the screened out users.

5. The method of claim 1, wherein ASIN represents an inverse Sine function.

6. The method of claim 1, wherein the index values corresponding to respective second regions comprise values in the range [0, 1000].

7. The method of claim 1, wherein the index values corresponding to respective second regions are normally distributed.

8. A position information providing device (200), which is applied to a server and comprises multiple modules (202,203,204,206, 208, 210) configured to perform the method of any one of claims 1 to 7.

## Patentansprüche

1. Verfahren zum Bereitstellen von Positionsinformationen für einen Benutzer, wobei das Verfahren umfasst:
Empfangen (102) von Schlüsselwörtern, die von einem ersten Benutzer eingegeben wurden, durch einen Server und von einer Vorrichtung des Benutzers;
Bestimmen (103), durch den Server, mehrerer Zielbenutzereigenschaften gemäß den Schlüsselwörtern, wobei die mehreren Zielbenutzereigenschaften menschenbezogene Eigenschaften umfassen, die optional einen Benutzerberuf, ein Alter, ein Verbrauchsniveau oder eine Verbrauchshäufigkeit beinhalten, und wobei das Bestimmen der mehreren Zielbenutzereigenschaften gemäß den Schlüsselwörtern umfasst:
Bestimmen, durch den Server, ob die vom ersten Benutzer eingegebenen Schlüsselwörter mehrere auf dem Server gespeicherte Zielbenutzereigenschaften umfassen,
als Reaktion auf das Bestimmen, dass die vom ersten Benutzer eingegebenen Schlüsselwörter mehrere auf dem Server gespeicherte Zielbenutzereigenschaften umfassen, Einstellen der Schlüsselwörter als die mehreren Zielbenutzereigenschaften, oder
als Reaktion auf das Bestimmen, dass die vom ersten Benutzer eingegebenen Schlüsselwörter keine auf dem Server gespeicherte Zielbenutzereigenschaft umfassen, Bestimmen der mehreren Zielbenutzereigenschaften unter Verwendung einer gelernten Beziehung zwischen Schlüsselwörtern und Zielbenutzereigenschaften, die auf dem Server gespeichert sind oder von diesem gelernt wurden;
Bestimmen (104) einer ersten Region durch den Server und basierend auf i) aktuellen Positionsinformationen des ersten Benutzers oder ii) einer vom ersten Benutzer eingegebenen oder ausgewählten Zielregion;
Aufteilen der ersten Region durch den Server in mehrere zweite Regionen gemäß einer vorbestimmten Regel, wobei das Aufteilen umfasst: i) Aufteilen der ersten Region in mehrere zweite Regionen gemäß einer vorbestimmten Regionsgröße, ii) Umwandeln der aktuellen Positionsinformation des ersten Benutzers in Längen- und Breitenkoordinaten und Umwandeln der Längen- und Breitenkoordinaten in eine entsprechende zweite Region gemäß einer Anwendung eines geographischen Positionsdienstanbieters, oder iii) Aufteilen der ersten Region basierend auf der Bevölkerungsdichte;
Identifizieren, durch den Server, von Positionen aller dritten Benutzer in der ersten Region innerhalb einer vorbestimmten Zeitperiode;
Identifizieren, durch den Server, von Benutzereigenschaften aller dritten Benutzer in der ersten Region innerhalb der vorbestimmten Zeitperiode;
Bestimmen (106), durch den Server und gemäß den identifizierten Positionen aller dritten Benutzer in der ersten Region, von Anzahlen von Benutzern mit den mehreren Zielbenutzereigenschaften in jeweiligen zweiten Regionen;
Bestimmen (108), durch den Server und gemäß den bestimmten Anzahlen der Benutzer, eines oder mehrere Kandidatenregionen aus den mehreren zweiten Regionen, wobei das Bestimmen umfasst:
i) separates Bestimmen, für jede der mehreren Zielbenutzereigenschaften, von Indexwerten der Zielbenutzereigenschaft in jeweiligen zweiten Regionen gemäß den Anzahlen der Benutzer, umfassend
a) Sortieren der zweiten Bereiche gemäß einer aufsteigenden Reihenfolge der Anzahlen der Benutzer, und sequentielles Zuweisen von Sequenznummern von 1 bis N, wobei N eine positive ganze Zahl größer als 1 ist,
b) Bestimmen von Sequenznummernwerten, die den jeweiligen zweiten Regionen entsprechen, gemäß einer ersten Formel, die gegeben ist durch: Sequenznummernwert= ((Sequenznummer jeder zweiten Region / die Gesamtzahl der zweiten Regionen) - 0,5)^{∗}2, und
c) Bestimmen von Indexwerten, die den jeweiligen zweiten Bereichen entsprechen, gemäß einer zweiten Formel, die gegeben ist durch: Indexwert= round((ASIN(Sequenznummernwert)π+0,5)^{∗}1000),
ii) Bestimmen umfassender Indexwerte jeweiliger zweiter Regionen gemäß den Indexwerten der mehreren Zielbenutzereigenschaften, wobei jeder umfassende Indexwert eine Summe von Indexwerten jeweiliger Zielbenutzereigenschaften umfasst, wobei die Summe gemäß voreingestellter Gewichtungen gewichtet ist,
iii) Sortieren der mehreren zweiten Regionen gemäß den umfassenden Indexwerten, und
iv) Bezeichnen der obersten M zweiten Regionen als die Kandidatenregionen, wobei M einen vorbestimmten numerischen Wert repräsentiert; und
Bereitstellen der Kandidatenregionen für den ersten Benutzer (110) durch den Server.

2. Verfahren nach Anspruch 1, wobei das Identifizieren von Positionsinformationen für alle dritten Benutzer in der ersten Region innerhalb einer vorbestimmten Zeitperiode umfasst:
Identifizieren mehrerer zweiter Regionen, in denen sich die Benutzer in der ersten Region befinden, wenn sie sich innerhalb der vorbestimmten Zeitperiode bei einer vorbestimmten Anwendung anmelden, und wie oft sich jeder der Benutzer in den jeweiligen zweiten Regionen bei der Anwendung anmeldet; und
Verwenden einer zweiten Region, in der sich ein Benutzer von den Benutzern in der ersten Region am häufigsten bei der Anwendung anmeldet, als Position des Benutzers.

3. Verfahren nach Anspruch 1, wobei das Identifizieren von Benutzereigenschaften aller dritten Benutzer in der ersten Region innerhalb der vorbestimmten Zeitperiode umfasst:
Identifizieren von Netzwerkinformationen der Benutzer in der ersten Region; und
Bestimmen der Benutzereigenschaften der Benutzer in der ersten Region gemäß den Netzwerkinformationen.

4. Verfahren nach Anspruch 3, wobei das Bestimmen der Anzahlen von Benutzern mit der Zielbenutzereigenschaft in jeweiligen zweiten Regionen umfasst:
Identifizieren von Benutzern in der ersten Region, deren Positionen in jeweiligen zweiten Regionen liegen; und
Herausfiltern von Benutzern mit der Zielbenutzereigenschaft aus den Benutzern im ersten Bereich und Zählen der Anzahl der herausgefilterten Benutzer.

5. Verfahren nach Anspruch 1, wobei ASIN eine inverse Sinusfunktion repräsentiert.

6. Verfahren nach Anspruch 1, wobei die Indexwerte, die den jeweiligen zweiten Bereichen entsprechen, Werte im Bereich [0, 1000] umfassen.

7. Verfahren nach Anspruch 1, wobei die den jeweiligen zweiten Bereichen entsprechenden Indexwerte normalverteilt sind.

8. Vorrichtung (200) zum Bereitstellen von Positionsinformationen, die auf einen Server angewendet wird und mehrere Module (202, 203, 204, 206, 208, 210) umfasst, die dazu ausgelegt sind, das Verfahren nach einem der Ansprüche 1 bis 7 durchzuführen.

## Revendications

1. Procédé pour fournir des informations de position à un utilisateur, le procédé comprenant :
la réception (102), par un serveur et à partir d'un dispositif utilisateur, de mots-clés entrés par un premier utilisateur ;
la détermination (103), par le serveur, de multiples caractéristiques d'utilisateur cible en fonction des mots clés, les multiples caractéristiques d'utilisateur cible comprenant des caractéristiques liées à un être humain qui incluent éventuellement une profession, un âge, un niveau de consommation ou une fréquence de consommation, et la détermination des multiples caractéristiques d'utilisateur cible en fonction des mots clés comprenant :
la détermination, par le serveur, si les mots clés entrés par le premier utilisateur comprennent ou ne comprennent pas des multiples caractéristiques d'utilisateur cible stockées sur le serveur,
en réponse à la détermination que les mots clés entrés par le premier utilisateur comprennent des multiples caractéristiques d'utilisateur cible stockées sur le serveur, la définition des mots clés en tant que multiples caractéristiques d'utilisateur cible, ou
en réponse à la détermination que les mots clés entrés par le premier utilisateur ne comprennent pas une caractéristique d'utilisateur cible stockée sur le serveur, la détermination des multiples caractéristiques d'utilisateur cible en utilisant une relation apprise entre les mots clés et les caractéristiques d'utilisateur cible stockées sur le serveur ou apprises par le serveur ;
la détermination (104), par le serveur et sur la base i) des informations de position actuelle du premier utilisateur, ou ii) d'une région cible entrée ou sélectionnée par le premier utilisateur, d'une première région ;
la division, par le serveur, de la première région en de multiples secondes régions en fonction d'une règle prédéterminée, la division comprenant i) la division de la première région en de multiples secondes régions en fonction d'une taille de région prédéterminée, ii) la conversion des informations de position actuelle du premier utilisateur en coordonnées de longitude et de latitude et la conversion des coordonnées de longitude et de latitude en une seconde région correspondante en fonction d'une application d'un fournisseur de services de position géographique, ou iii) la division de la première région sur la base de la densité de population ;
l'identification, par le serveur, des positions de tous les utilisateurs tiers dans la première région à l'intérieur d'une période de temps prédéterminée ;
l'identification, par le serveur, de caractéristiques d'utilisateur de tous les utilisateurs tiers dans la première région à l'intérieur de la période de temps prédéterminée ;
la détermination (106), par le serveur et en fonction des positions identifiées de tous les utilisateurs tiers dans la première région, de quantités d'utilisateurs ayant les multiples caractéristiques d'utilisateur cible dans les secondes régions respectives, la détermination (108), par le serveur et en fonction des quantités déterminées des utilisateurs, d'une ou plusieurs régions candidates parmi les multiples secondes régions, la détermination comprenant :
i) la détermination séparément, pour chacune des multiples caractéristiques d'utilisateur cible, des valeurs d'indice de la caractéristique d'utilisateur cible dans des secondes régions respectives en fonction des quantités des utilisateurs, comprenant :
a) le tri des secondes régions en fonction d'un ordre croissant des quantités des utilisateurs, et l'attribution séquentiellement de numéros de séquence de 1 à N, N étant un nombre entier positif supérieur à 1,
b) la détermination des valeurs de numéro de séquence correspondant aux secondes régions respectives en fonction d'une première formule donnée par : valeur de numéro de séquence = ((numéro de séquence de chaque seconde région/nombre total de secondes régions) - 0,5)^{∗}2, et
c) la détermination des valeurs d'indice correspondant aux secondes régions respectives en fonction d'une seconde formule donnée par : valeur d'indice = round((ASIN(valeur de numéro de séquence)π+0,5)^{∗}1000),
ii) la détermination de valeurs d'indice global de secondes régions respectives en fonction des valeurs d'indice des multiples caractéristiques d'utilisateur cible, chaque valeur d'indice global comprenant une somme de valeurs d'indice des caractéristiques respectives d'utilisateur cible, la somme étant pondérée en fonction de pondérations prédéfinies,
iii) le tri des multiples secondes régions en fonction des valeurs de l'indice global, et
iv) la désignation des M secondes régions supérieures comme régions candidates, M représentant une valeur numérique prédéterminée ; et
la fourniture, par le serveur, des régions candidates pour le premier utilisateur (110).

2. Procédé selon la revendication 1, les informations de position d'identification pour tous les utilisateurs tiers dans la première région à l'intérieur d'une période de temps prédéterminée comprenant :
l'identification de multiples secondes régions où les utilisateurs dans la première région sont situés lorsqu'ils se connectent à une application prédéterminée à l'intérieur de la période de temps prédéterminée, et du nombre de fois que chacun des utilisateurs se connecte à l'application dans les secondes régions respectives ; et
l'utilisation d'une seconde région dans laquelle un utilisateur parmi les utilisateurs dans la première région se connecte à l'application le plus grand nombre de fois en tant que position de l'utilisateur.

3. Procédé selon la revendication 1, l'identification des caractéristiques d'utilisateur de tous les utilisateurs tiers dans la première région à l'intérieur de la période de temps prédéterminée comprenant :
l'identification d'informations de réseau des utilisateurs dans la première région ; et
la détermination des caractéristiques d'utilisateur des utilisateurs dans la première région en fonction des informations de réseau.

4. Procédé selon la revendication 3, la détermination des quantités d'utilisateurs ayant la caractéristique d'utilisateur cible dans les secondes régions respectives comprenant :
l'identification d'utilisateurs dans la première région dont les positions se trouvent dans des secondes régions respectives ; et
la suppression des utilisateurs ayant la caractéristique d'utilisateur cible des utilisateurs dans la première région et le comptage des quantités d'utilisateurs supprimés.

5. Procédé selon la revendication 1, ASIN représentant une fonction sinusoïdale inverse.

6. Procédé selon la revendication 1, les valeurs d'indice correspondant aux secondes régions respectives comprenant des valeurs dans la plage [0, 1000].

7. Procédé selon la revendication 1, les valeurs d'indice correspondant aux secondes régions respectives étant normalement distribuées.

8. Dispositif de fourniture d'informations de position (200), qui est appliqué à un serveur et comprend de multiples modules (202, 203, 204, 206, 208, 210) configurés pour réaliser le procédé selon l'une quelconque des revendications 1 à 7.
